# EUROPEAN PATENT APPLICATION

(11) **EP 2 290 334 A1**
(43) Date of publication of application: **02.03.2011**
(21) Application number: 10168018.9
(22) Date of filing: 30.06.2010
(51) Int. Cl.: G01F 23/22, G01F 23/24, F17C 13/02

(54) **A cryogen level probe**

(30) Priority: 01.09.2009 GB 0915110
(71) Applicant: SIEMENS PLC, Camberley GU16 8QD (GB)
(72) Inventor: Edgley, Paul, Aston, Bampton, Oxfordshire OX18 2DU (GB)
(74) Representative: French, Clive Harry

(57) **Abstract**

A cryogen level probe, comprising a superconducting conductor (30); a heater (32) arranged to heat a part of the superconducting conductor; current leads (34, 36) arranged to supply electric current through the superconducting conductor; and voltage sense leads (38; 40) for providing a voltage sensor (44) with a voltage appearing across the superconducting conductor due to the passage of the electric current. The heater, the current leads and the voltage sense leads are formed as foil tracks on a flexible substrate (50). The superconducting conductor may also be formed as a foil track on the flexible substrate.

## Description

The present invention relates to an improved cryogen level probe, as used for detecting the level of a liquid cryogen within a cryogen vessel. The invention will be particularly described with reference to detecting the level of helium within a cryogen vessel housing a superconducting magnet of a magnetic resonance imaging (MRI) system, but may be applied to the detection of a range of liquid cryogens in a cryogen vessel for any purpose.

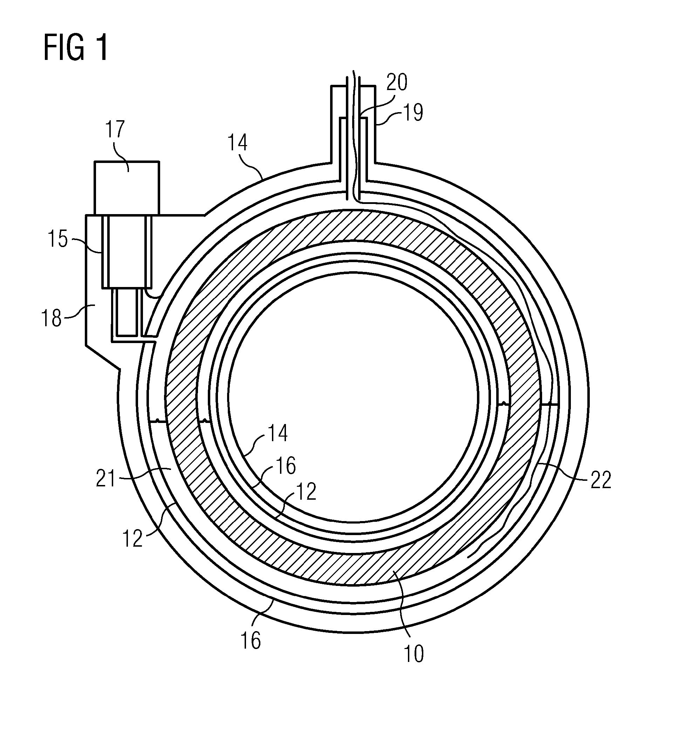

Fig. 1 shows a conventional arrangement of a cryostat including a cryogen vessel 12 containing a liquid cryogen 21. A cooled superconducting magnet 10 is provided within cryogen vessel 12, itself retained within an outer vacuum chamber (OVC) 14. One or more thermal radiation shields 16 are provided in the vacuum space between the cryogen vessel 12 and the outer vacuum chamber 14. In some known arrangements, a refrigerator 17 is mounted in a refrigerator sock 15 located in a turret 18 provided for the purpose, towards the side of the cryostat. The refrigerator 17 provides active refrigeration to cool cryogen gas within the cryogen vessel 12, in some arrangements by recondensing it into a liquid. The refrigerator 17 may also serve to cool the radiation shield 16.

Many other features, such as electrical connections and mechanical supports, are provided but are not shown in the drawing for clarity.

To maintain the magnet 10 in a superconducting state, a certain level of liquid cryogen 21 must be maintained within the liquid vessel. It is not possible to directly observe the level of cryogen, as the cryogen is effectively a sealed metal vessel at a temperature of 4K, in the case of helium cryogen. It is therefore necessary to provide a sensor to detect the level of cryogen within the cryogen vessel, which allows external monitoring of the cryogen level. Also, when the cryogen is initially filled, or topped-up, with liquid cryogen, it is necessary to know the level of cryogen present within the cryogen vessel. When filling or topping-up, significant quantities of liquid cryogen may be lost due to boil-off as the cryogen vessel and its contents are cooled, so it is not sufficient simply to monitor the volume of liquid cryogen added. The same sensor may be used to indicate the level of liquid cryogen in the cryogen vessel as it is being filled. This sensor is called a cryogen level probe. A cryogen level probe 22 is schematically represented in Fig.1. A sensitive length of the cryogen level probe is located to lie within a range of cryogen levels which it is desired to detect. The cryogen level probe may be fixed to a mechanical support structure such as a former of the magnet 10, to retain it in position. This is usually done during assembly of the cryogen vessel around the magnet.

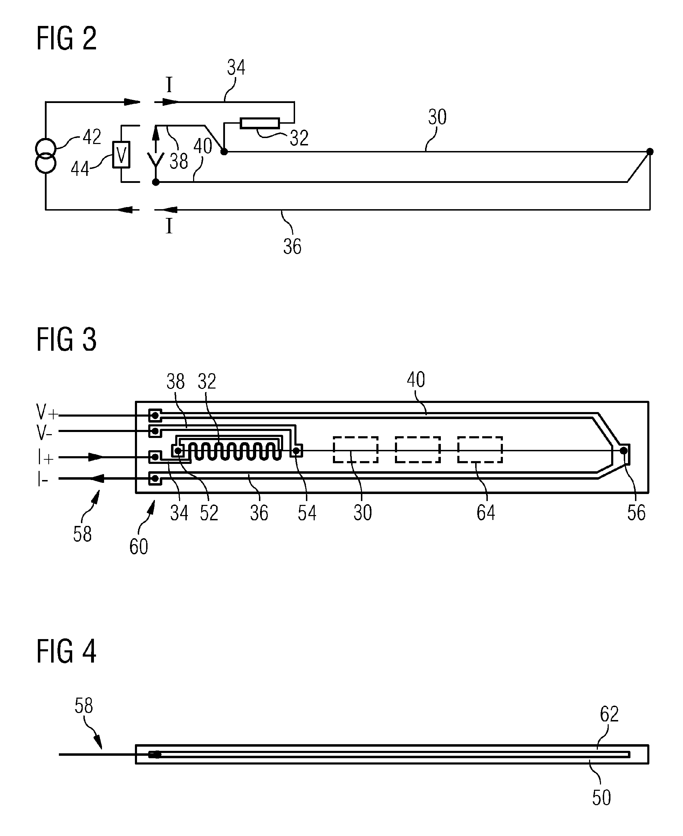

The cryogen level probe is an electrical device, and an electrical schematic of a conventional cryogen level probe is shown in Fig. 2. A length of superconducting wire 30 is provided, having a length somewhat in excess of the range of depths which the probe is required to monitor. The superconducting wire may be a single filament, for example having a thickness of approximately 0.1mm. The superconducting wire is not provided with a conductive outer sheath, to ensure that it has a relatively high resistance when quenched. A heater, in the form of a piece of resistive wire 32 is provided in thermally adjacent to an upper end of the superconducting wire 30, and electrically connected to that end. Current carrying leads 34, 36 are connected to respective ends of the series connection of the heater, resistive wire 32, and superconducting wire 30. Voltage sense wires 38, 40 are connected to respective upper and lower ends of the superconducting wire.

In use, the cryogen level probe will be present in the cryogen vessel, and the superconducting wire 30 will be cooled to below its transition temperature, and will be superconducting. An electric current I is passed through the superconducting wire 30 using the current leads 34, 36. The current will also pass through the heater, resistive wire 32, which will heat up. This heating will cause quench in the adjacent part of the superconducting wire. As the current I flows through the resistive, quenched, part of the superconducting wire, it will cause heating of that wire. The quench will propagate along the superconducting wire until it meets the surface of the liquid cryogen. That part of the superconducting wire which is immersed in liquid cryogen will not quench, as it will be kept at a temperature below the transition temperature by boiling of the liquid cryogen.

Voltage sense wires 38, 40 are attached to respective ends of the superconducting wire 30. Once the current I is applied, a suitable length of time is allowed to lapse to ensure that the quench within the superconducting wire has propagated down to the surface of the liquid cryogen. Then, the voltage appearing between voltage sense wires 38, 40 is measured. A current source 42, for connection to current leads 34, 36; and a voltage sensor 44, for connection to the voltage sense wires 38, 40, are schematically represented in Fig. 2 and, in a practical arrangement, may form parts of an electrical control device, external to the cryogen vessel.

The voltage between voltage sense wires is a representation of the quenched length of the superconducting wire: that is, the part of the superconducting wire above the surface of the liquid cryogen, as that part of the superconducting wire which is below the surface of the liquid cryogen will remain superconductive. The superconducting wire typically has a constant resistance per unit length, so the measured voltage, in conjunction with the magnitude of the applied current I may easily be converted into an indication of the level of cryogen within the cryogen vessel.

A conventional helium probe is made up of the wires as described, soldered together and otherwise loosely held within a protective outer, such as a polyester braid. The probe may be housed within a plastic or metal tube within the cryogen vessel. Difficulties have been experienced in achieving reliable and consistent solder joints, and mechanical damage may occur, particularly to the superconducting wire, due to the fragile nature of such a probe. If the solder forms large joints, the solder may act as a heat sink so effective that the quench of the superconducting wire 30 is unable to propagate past.

Description of a conventional cryogen level probe may be found in United Kingdom patent application GB2401688.

The present invention aims to provide an improved cryogen level probe, and methods for manufacturing such cryogen level probes.

The present invention accordingly provides cryogen level probes, a cryogen vessel and a magnetic resonance imaging system as defined in the appended claims.

The above, and further, objects, characteristics and advantages of the present invention will become more apparent from the following description of certain embodiments thereof, in conjunction with the appended claims, wherein:
Fig. 1 shows a schematic cross-section of a magnet for an MRI system, including a cryogen level probe;
Fig. 2 schematically shows the circuit of a cryogen level probe, together with external equipment which is connected to the cryogen level probe when in use;
Fig. 3 illustrates an example plan view of a cryogen level probe according to an embodiment of the present invention; and
Fig. 4 illustrates an example elevation view of a cryogen level probe according to an embodiment of the present invention.

Fig. 3 illustrates an example plan view of a helium level probe according to an embodiment of the present invention. According to the present invention, the cryogen level probe is not formed simply of loose wires soldered together, but most of the required connections are formed as conductive tracks on a flexible substrate. In an example, a polyimide substrate layer 50 (Fig. 4) is provided with conductive foil tracks which act as current leads 34, 36 and voltage sense leads 38, 40. A resistive track 32 may be provided as the heater to heat superconducting conductor 30 and induce quench. It may be found difficult to provide the superconducting conductor as a track on the polyimide substrate layer, and the embodiment of Fig. 3 shows a separate superconducting wire filament 30 electrically connected, for example by resistance welding, at joints 52, 54, 56. Welding is preferred as a joining method as it has been found to be more controllable and more repeatable than soldering. Resistance welding has also been found more suitable for automation than soldering.

The foil tracks may be formed by etching a complete metallic foil layer into the required pattern, as is conventionally done in printed circuit board manufacture. The tracks may, for example, be formed of aluminium or copper. Alternatively, the tracks may be cut, for example stamped, from a sheet of metal foil, and the tracks adhesively attached to the polyimide substrate. Preferably, the heater 32 is formed of a different, more resistive foil material than the other tracks. Alternatively, the heater 32 may be formed of a foil of the same material as the other tracks, but thinner. For example, the current lead 36 and the voltage sense wires 28, 40 may be formed of aluminium, while the heater, resistive track 32, may be formed of INCONEL® (high strength austenitic nickel-chromium-iron alloy). Use of different materials for different tracks may be achieved more simply by stamping sheets of foil of the required materials and then attaching them to the polyimide substrate than by providing regions of different metals on the substrate and then etching them. Flexible wires 58 are attached to the conductive tracks and the heater at joints 60. In use, the flexible wires are led from the cryogen level probe out of the cryogen vessel, for connection to an external electrical control device, arranged to supply current through the current leads and detect a voltage cross the voltage sense wires. The flexible wires are preferably of insulated aluminium or copper.

The superconducting conductor 30 may be a wire filament of niobium titanium. This may be welded to the heater and the conductive tracks at joints 52, 54, 56.

According to a preferred feature of the present invention, an insulating cover layer 62 (Fig. 4) is then applied over the conductive tracks and the superconducting conductor. This cover layer protects the superconducting conductor and the conductive tracks from damage, and insulates them from electrical contact with any components of the magnet or the cryogen vessel. By also enclosing the joints 60 between the substrate 50 and the cover layer 60, those joints are strengthened and made more resistant to flexing.

The cover layer may be an adhesive-backed polyimide layer. Alternatively, a non-adhesive layer may be used, with the whole assembly being heated and compressed in a vacuum bag to ensure adhesion between the substrate and the cover layer.

In alternative embodiments, the substrate 50 carrying tracks and wires as described may be dipped into a liquid such as a latex solution or a molten polymer which hardens to form a flexible coating. In yet other embodiments, a solidifying resin may be applied, for example by spraying, over the tracks and the wires on the substrate to form a flexible protective cover layer.

It is necessary that the superconducting conductor 30 is in reasonable thermal contact with the liquid cryogen when in use. If the cover layer 62 is too thermally insulating, the cryogen level probe may not give an accurate reading. For example, the quench induced in an upper end of the cryogen level probe may propagate below the level of the liquid cryogen. To address this problem, some embodiments of the present invention may be provided with thinned portions 64 of the cover layer. These may be formed after the cover layer has been formed, for example by etching or mechanical removal. Alternatively, a flexible sheet used as the insulating cover layer 62 may have thinned portions 64 pre-formed in it. In some embodiments, the thinned portions may be replaced with through-holes in the cover layer 62. In yet other embodiments, the thinned portions may be moulded. The thinned portions may be provided in regions approximately corresponding to "high" "medium" and "low" cryogen levels, as illustrated, or may extend for substantially the sensitive length of the superconducting conductor, between the connections 54 and 56, where the voltage sense wires are electrically joined to the superconducting wire.

Alternatively, it may be found that a suitable superconducting conductor may be formed as a track on the substrate 50. This may result in a mechanically more robust cryogen level probe. Such a superconducting track may be formed as a foil tape, adhered over the resistive track 32, in order to ensure effective thermal transfer to the superconducting conductor.

Arrangement of the cryogen level probe in a laminate structure as described reduces the chances of an unwanted thermal load on the superconducting conductor, for example by contact with a part of the magnet. Any unwanted thermal load such as this may prevent the quench from propagating any further along the superconducting conductor, and will lead to a false indication of cryogen level.

The cryogen level probe of the present invention is believed to provide improved mechanical stability and construction, better control of the heater characteristics, and consistency in the joints between parts.

While the invention has been described with particular reference to polyimide substrate and cover layers, an example material being available under the trademark KAPTON, other flexible materials may also be used such as polyester materials available under the trademark MYLAR. Polyimide and polyester materials are believed to be suited to use in a cryogenic environment, surviving well mechanically in such an environment. They have good electrical insulation characteristics and are readily available in a range of thicknesses, to allowing easy tailoring of the thermal interface characteristic. Other materials may be used, provided that they have appropriate electrical and mechanical properties. Some composite materials may be found suitable.

In embodiments where the tracks are formed as separate metal foil pieces and then adhered to the substrate, the substrate may even be a woven or non-woven cloth material.

Operation of the cryogen level probe of the present invention is as for a conventional cryogen level probe. For example, a current propagation pulse of 1A is applied through the resistive track 32 and the superconducting conductor 30, to begin quench of the superconducting conductor. The current may then be reduced, during which time the quench propagates down the length of the superconducting conductor. The current may remain at this level for sufficient time to give confidence that the quench has reached the surface of the liquid cryogen. Then, the current may be reduced to a yet lower level for voltage measurement. This ensures that the quench does not propagate below the surface of the liquid cryogen, which might be the case if too much current were supplied during voltage measurement.

The cryogen level probe of the present invention is preferably built in to the cryogen vessel as it is assembled around a superconducting magnet. A curved support piece, such as an arc shaped piece of a composite material such as fibreglass reinforced plastic may be provided to support the cryogen level probe in position.

While the present invention has been described with reference to certain specific embodiments, various modifications and amendments may be made within the scope of the present invention as defined by the appended claims. For example, flexible substrate and cover materials other than those specifically described may be used, as may conducting and resistive materials of the probe. The material of the superconducting conductor should be chosen as appropriate to have a transition temperature near, but above, the boiling point of the liquid cryogen to be monitored. While the preferred assembly technique is to use resistance welding for joining the circuit components together, other joining methods such as other types of welding; soldering; and mechanical interference may be used. Different joining methods may also be used, whereby the superconducting wire may be welded to only a subset of the tracks. Alternative electrical arrangements may be made, too. For example, the heater 32 may be supplied with electric current independently of the current applied to the superconducting wire.

## Claims

1. A cryogen level probe, comprising a superconducting conductor (30); a heater (32) arranged to heat a part of the superconducting conductor; current leads (34, 36) arranged to supply electric current through the superconducting conductor; and voltage sense leads (38; 40) for providing a voltage sensor (44) with a voltage appearing across the superconducting conductor due to the passage of the electric current,
**characterised in that**
the heater, the current leads and the voltage sense leads are formed as foil tracks on a flexible substrate (50).

2. A cryogen level probe according to claim 1, further provided with flexible wires (58) connected (60) to at least some of the foil tracks, enabling electrical connection thereof to external equipment (42; 44).

3. A cryogen level probe according to claim 1 or claim 2, wherein an electrically insulating flexible cover layer (62) is placed over the superconducting conductor, the heater, the current leads and the voltage sense leads, enclosing the superconducting conductor, the heater, the current leads and the voltage sense leads between the substrate (50) and the cover layer (62).

4. A cryogen level probe according to claim 3 when dependent upon claim 2, in which joints (60) between the flexible wires and foil tracks are enclosed between the substrate (50) and the cover layer (62).

5. A cryogen level probe according to any preceding claim, wherein the superconducting conductor is welded to at least a subset of the heater, the current leads and the voltage sense leads.

6. A cryogen level probe according to claim 2, wherein at least some of the flexible wires are welded to corresponding foil tracks.

7. A cryogen level probe according to claim 3 wherein the electrically insulating flexible cover layer includes at least one thinned region (64) over part of the superconducting conductor.

8. A cryogen level probe according to any preceding claims wherein the substrate (50) comprises a sheet of polyimide material.

9. A cryogen level probe according to claim 3 wherein the electrically insulating flexible cover layer (62) comprises a layer of polyimide material.

10. A cryogen level probe according to any preceding claim, wherein the superconducting conductor is formed as a foil track on the flexible substrate (50).

11. A cryogen vessel (12) equipped with a cryogen level probe according to any preceding claim.

12. A magnetic resonance imaging system comprising a superconducting magnet housed within a cryogen vessel according to claim 11.
